# EUROPEAN PATENT APPLICATION

(11) **EP 4 654 223 A1**
(43) Date of publication of application: **26.11.2025**
(21) Application number: 25175550.0
(22) Date of filing: 09.05.2025
(51) Int. Cl.: H01B 3/00, H01F 5/06, H02K 3/30, H02K 3/40, H02K 3/34

(54) **ELECTRIC MACHINE AND METHOD FOR ELECTRICALLY INSULATING PORTIONS OF AN ELECTRIC MACHINE**

(30) Priority: 23.05.2024 US 202418672901
(71) Applicant: GE Aviation Systems LLC, Grand Rapids, MI 49512 (US)
(72) Inventor: ZHANG, Wei, Grand Rapids, 49512 (US); YAGIELSKI, John Russell, Grand Rapids, 49512 (US); YOUNSI, Karim, Grand Rapids, 49512 (US); ZHANG, Lili, Grand Rapids, 49512 (US)
(74) Representative: Openshaw & Co.

(57) **Abstract**

An electric winding assembly (100), (200), includes a conductor core (108) having a first end (110) and an opposing second end (112), an insulation layer (114) overlying the conductor core (108), and a conductive shield layer (116) overlying the insulation layer (114). The conductive shield layer (116) includes an insulative carrier (117) circumferentially surrounding the insulation layer (114) and a conductive layer (118) disposed on the insulative carrier (117), the insulative carrier (117) formed from a material having a thermal rating greater than 180°C, the conductive shield layer (116) having a surface resistivity between 1.5 and 10 ohms per square.

## Description

### TECHNICAL FIELD

This disclosure generally relates to electrically insulating portions of an electric machine, specifically a set of windings within a stator core of the electric machine.

### BACKGROUND

Electric machines, such as electric motors or electric generators, are used in energy conversion. In the aircraft industry, it is common to find an electric motor having a combination of motor and generator modes, where the electric machine, in motor mode, is used to start an aircraft engine, and, depending on the mode, functions as a generator, too, to supply electrical power to the aircraft systems. The electric machine can further drive other portions of the aircraft engine such as a forward fan or a propeller. Regardless of the mode, an electric machine typically includes a stator with windings that works in conjunction with a rotor that also has windings and is driven to rotate by a source of rotation, which for a generator can be a gas turbine engine or for a motor can be the stator.

### BRIEF DESCRIPTION OF THE DRAWINGS

A full and enabling disclosure of the present description, including the best mode thereof, directed to one of ordinary skill in the art, is set forth in the specification, which makes reference to the appended FIGS., in which:
FIG. 1 is an isometric view of a gas turbine engine having a generator, in accordance with various aspects described herein.
FIG. 2 is an isometric view of an exterior of the generator of FIG. 1, in accordance with various aspects described herein.
FIG. 3 is a schematic cross-sectional view of the generator of FIG. 2, taken along line III-III of FIG. 2, in accordance with various aspects described herein.
FIG. 4 is an isometric view of a stator assembly of the generator of FIG. 3, in accordance with various aspects described herein.
FIG. 5 is a schematic cross-sectional view of an electric winding assembly of the generator of FIG. 3, in accordance with various aspects as described herein.
FIG. 6 is a perspective view of the electric winding assembly of FIG. 5, in accordance with various aspects as described herein.
FIG. 7 is a schematic cross-section view of the stator core slot of FIG. 3, in accordance with various aspects as described herein.
FIG. 8 is a method of forming the stator core of FIG. 3, in accordance with various aspects as described herein.

### DETAILED DESCRIPTION

Aspects of the disclosure can be implemented in any stator assembly or electric machine assembly having a set of stator slots wound with conductive windings. The conductive windings or stator windings can include a conductor core, an insulation layer overlying the conductive core, and a conductive shield layer overlying the insulation layer. For purposes of this description, the stator assembly is described with respect to an electric machine, electric machine assembly, generator, or similar language, which is meant to clarify that one or more stator or rotor combinations can be included in the machine. Non-limiting aspects of an electric machine can include an electric generator, an electric motor, a starter/generator, a transformer, an inductor or the like.

While "a set of" various elements will be described, it will be understood that "a set" can include any number of the respective elements, including only one element. As used herein, the terms "axial" or "axially" refer to a dimension along a longitudinal axis of a generator or along a longitudinal axis of a component disposed within the generator.

As used herein, the terms "radial" or "radially" refer to a dimension extending between a center longitudinal axis, an outer circumference, or a circular or annular component disposed thereof. The use of the terms "proximal" or "proximally," either by themselves or in conjunction with the terms "radial" or "radially," refers to moving in a direction toward the center longitudinal axis, or a component being relatively closer to the center longitudinal axis as compared to another component.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

As used herein, the term "electrically insulative", "insulator", or "insulation" refers to a material that exhibits a low electrical conductivity (for example, less than about 10⁻⁸ siemens per meter (S/m)). Unless stated otherwise, as used herein, the term "insulation" or "insulative" refers to electrical insulation or electrically insulative properties. For example, the term "insulation" refers to electrical insulation.

As used herein, the term "conductivity" refers to a property of a material that allows a flow of charge or electric current therethrough. Also as used herein, the term "electrical conductor" refers to a material that exhibits a relatively high electrical conductivity (for example, greater than about 10⁻⁷ S/m). Unless stated otherwise, as used herein, the term "conductive" refers to electrical conductivity, and the term "conductor" refers to an electrical conductor.

As used herein, the term "semi-conductive" refers to a property of a material having an electrical conductivity value falling between that of a conductor, and an insulator (for example, less than about 10-7 S/m and greater than about 10-8 S/m). Also as used herein the term "semiconductor" refers to a semi-conductive material.

As used herein the term "resistance", "resistivity", or "electrical resistance" refers to a property of a material, layer, or element indicative of an opposition to the movement of electrons across or through the material, layer, or element. Unless otherwise indicated, the terms "resistance" and "resistivity" refer to an electrical property of a material.

As used herein, the term "ohms per square" (ohms/sq) refers to a unit of an electrical measurement of surface resistivity across any given square area of surface of a material.

As used herein, the terms "arc," "arcing," "electrical arc," "arcing event," or "arc fault" will refer to an unintended or undesired conduction of electric current across a traditionally nonconductive medium, such as air.

As used herein, the term "partial discharge" refers to a localized electrical discharge that only partially bridges the insulation between conductors, and which may or may not occur adjacent to an electrical conductor. Partial discharges are in general a consequence of local electrical stress concentrations in or on an insulator. For example, in some instances, a partial discharge can occur on the surface of an insulator (e.g., a surface partial discharge). In other instances, a partial discharge can occur within or internal to the insulation (e.g., an internal partial discharge). Generally, such discharges appear as pulses having a duration of less than one microsecond, but can in some instances be longer. Partial discharges generally do not cause electrical failure (e.g., an arcing condition) immediately. However, such discharges can be repeated and can ultimately break down various insulating layers over time (e.g., of an electric winding assembly). This, in turn, can place the electric winding assembly at higher risk for arcing conditions to occur over time through the degradation of the insulating layers. Environmental conditions and performance parameters such as, for example, altitude and operating voltages, respectively, can increase the likelihood for an arc fault to occur. In general, partial discharges can be categorized into internal partial discharge, surface partial discharge and corona discharge.

As used herein. the terms "corona" or "corona discharge" refer a type of partial discharge that occurs in gaseous media around electrical conductors when an electrostatic potential gradient along a surface of an electrical insulation in air or another gaseous medium exceeds a certain value. In some cases, the corona discharge can produce sound, heat, light, or ionized particles which degrade the electrical insulation and can ultimately lead to electrical failure of nearby insulation.

As used herein, the phrase "stress grading system" refers to any material or layer which can be arranged to control or reduce a local electric field.

An electrical conductor (e.g., an electrical winding) that is charged to a non-zero potential or that conducts an electrical current can act as an antenna that provides energy, or radiated emissions, into the surrounding environment in the form of near-field electric and magnetic fields (E fields and M fields) and far-field electromagnetic fields (EM fields). Energy from these radiated emissions can couple onto other nearby conductors and radiate into the environment. The energy can typically be either radiated or conducted as electrical noise or electromagnetic interference (EMI) and can disrupt the proper operation of connected and nearby equipment.

Electric machines can include a stator assembly with one or more stator windings. Conventional stator windings, however, can be limited to electrical characteristic thresholds in particular operating environments. For example, problems associated with partial discharge can exacerbate in high altitude aerospace environment where a partial discharge inception voltage (PDIV) and partial discharge extinction voltage (PDEV) is much lower than at sea level due to lower air pressure. High voltage electric machines, (e.g., motors or generators) such as those in which the windings on the stator are operated at potentials over 300 Volts (V) (e.g., 10,000 V), in relation to a grounded stator core, are particularly susceptible to partial discharge. Accordingly, windings in an aircraft generator may be limited to particular currents, voltages, or the like, due to operational characteristics at flying altitudes. These limitations can, in turn, limit the effectiveness or efficiency of the electric machines, themselves. In one non-limiting example, typical electric machines may only be limited to 300 Volts or less at sea level or cruise altitude.

The PDIV and PDEV of typical electric machines can be increased by adding layers of insulation to the windings to ensure that undesired events, such as an internal partial discharge, does not occur. While those electrical characteristic limits can be altered for higher voltage and current levels by increasing the thickness of the insulation layers, the overall space within the electric machine for the stator windings is decreased as the thickness of the insulation layers increases. Alternatively, the spacing between stator coils with relatively high voltage potential (e.g., over 300 Volts) can be increased in order to reduce electrical stresses. However, by adopting thicker insulation, and/or increasing coil spacing will lead to larger machine sizes with low volume power density (e.g., in terms of weight or volume). Other conventional methods to suppress partial discharge in stator windings have also included the use of a relatively low electrical resistance, (e.g., 1000 ohms per square) semi-conductive coating or finishing tape (e.g., a polyester tape) on the coils. However, existing suitable commercially available material for partial discharge reduction is limited to service temperature of below a 180°C temperature rating (Class H) thereby limiting the operational temperature rating or the power rating, or both, of electric machines used in aircraft.

Aspects as disclosed herein relate to electric machines having improved power density and/or temperature ratings over conventional electric machines while preventing partial discharge at high altitudes. For example, as disclosed herein, an electric machine can include a conductor core having an insulation layer circumferentially surrounding the conductive conductor core, and a conductive shield layer overlying the insulation layer. The conductive shield layer can have a conductive shield layer circumferentially surrounding the insulation layer. The conductive shield layer can include an insulative carrier formed from a material having a thermal rating greater than 180°C, in accordance with IEC standard IEC 60216-1, the insulative carrier circumferentially surrounding the insulation layer, and a conductive layer having a surface resistivity between 1.5 and 10 ohms per square disposed on the insulative carrier. Such aspects can enable higher electrical ratings (e.g., greater than 300V at sea level or cruise altitude) for electric machines without need to increase the thickness of the insulation layers, and/or limit the service temperature of the electric machine (e.g., below a 180°C temperature rating (Class H)) thereby improving the operational temperature rating and/or the electrical power rating over conventional electric machines.

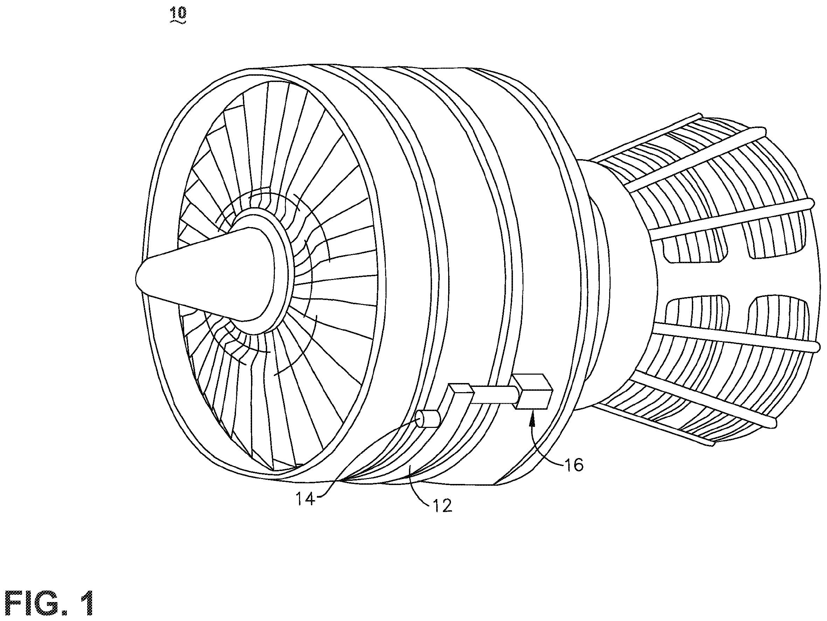

FIG. 1 illustrates a gas turbine engine 10 having an accessory gear box (AGB) 12 and an electric machine or generator 14 according to an aspect of the disclosure. The gas turbine engine 10 can be a turbofan engine commonly used in modern commercial aviation. For example, the gas turbine engine 10 could include a turboprop or turboshaft. The AGB 12 can be coupled to a turbine shaft (not shown) of the gas turbine engine 10 by way of a mechanical power take off 16. The gas turbine engine 10 can be any suitable gas turbine engine used in modern aviation. For example, the gas turbine engine 10 can be any of a variety of other known gas turbine engines such as a turboprop or turboshaft. The type and specifics of the gas turbine engine 10 are not germane to the disclosure and will not be described further herein. While a generator 14 is shown and described, it will be appreciated that the generator 14, can be any electric machine including, but not limited to, an electric motor or starter/generator.

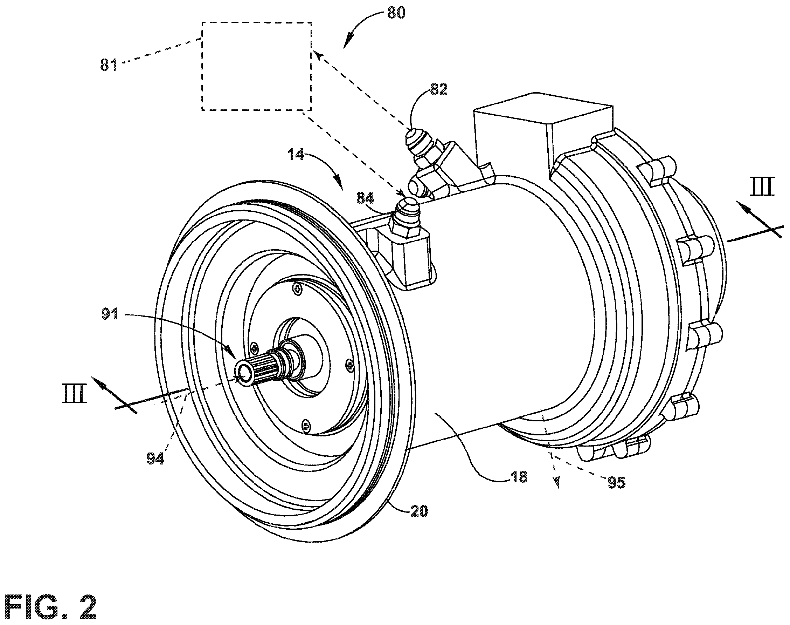

FIG. 2 illustrates a non-limiting example of the generator 14 and its housing 18 in accordance with aspects of the disclosure. The generator 14 can include a clamping interface 20, used to clamp the generator 14 to the AGB (not shown). A set of electrical connections can be provided on the exterior of the generator 14 to provide for the transfer of electrical power to and from the generator 14. The set of electrical connections can be further connected by cables to an electrical power distribution node of an aircraft having the gas turbine engine 10 to power various items on the aircraft, such as lights and seat-back monitors. The generator 14 can include a liquid cooling system 80 for cooling or dissipating heat generated by components of the generator 14 or by components proximate to the generator 14, one non-limiting example of which can be the gas turbine engine 10. For example, the generator 14 can include a liquid cooling system 80 using oil as a coolant.

The liquid cooling system 80 can include a cooling fluid inlet port 82 and a cooling fluid outlet port 84 for controlling the supply of coolant to the generator 14. In one non-limiting example, the cooling fluid inlet and outlet ports 82, 84 can be utilized for cooling at least a portion of a rotor or stator of the generator 14. The liquid cooling system can also include a second coolant outlet port 91, shown at a rotatable shaft or a drive shaft portion of the generator 14. Optionally, by way of non-limiting example, the liquid cooling system 80 can include a drive shaft coolant inlet port 94 or a generator coolant outlet port 95. While not shown, aspects of the disclosure can further include other liquid cooling system 80 components, such as a liquid coolant reservoir or a coolant source 81fluidly coupled with the cooling fluid inlet port 82, the drive shaft coolant inlet port 94, the cooling fluid outlet port 84, or the generator coolant outlet port 95, and a liquid coolant pump to forcibly supply the coolant through the ports 82, 84, 94, 95 or generator 14. As such, the liquid cooling system 80 and its respective components can constitute a fluid system with a set of fluid passages coupled to the coolant source 81.

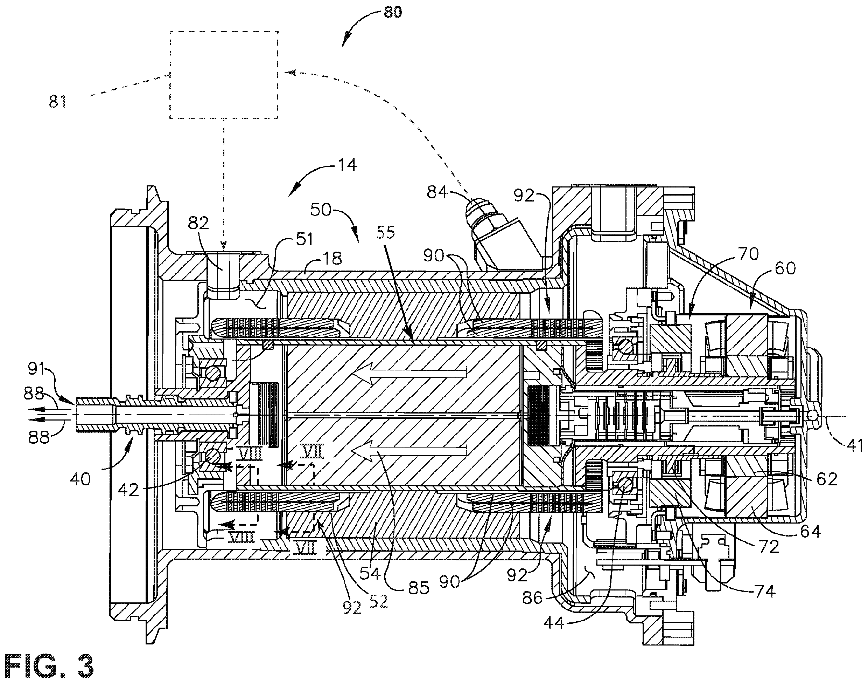

A non-limiting interior of the generator 14 is best seen in FIG. 3, which is a cross-sectional view of the generator 14 shown in FIG. 2 taken along line III-III.

A drive shaft 40 is located within the generator 14 and is the primary structure for supporting a variety of components. The drive shaft 40 can have a single diameter or one that can vary along its length. The drive shaft 40 is supported by spaced bearings 42 and 44 and configured to rotate about a rotational axis 41. Several of the elements of the generator 14 have a fixed component and a rotating component, with the fixed component fixed relative to the housing 18 and with the rotating component being provided on, or rotatably fixed relative to the drive shaft 40. Examples of these elements can include a main machine 50 or electric machine, housed within a main machine cavity 51, an exciter 60, and a permanent magnet generator (PMG) 70. It will be appreciated that the electric machine can specifically be a Pulse-Width Modulation (PWM) driven electric machine, or any other suitable electric machine such as, but not limited to, a 50/60Hz sine wave machine. In some aspects, the corresponding rotating component can comprise a main machine rotor 52 or rotor assembly, and the corresponding fixed component can comprise a main machine stator assembly. In other aspects, the corresponding rotating component can comprise a main machine rotor 52, an exciter rotor 62, and a PMG rotor 72, respectively, and the corresponding fixed component can comprise a main machine stator assembly 54 or stator assembly, an exciter stator 64, and a PMG stator 74. The main machine rotor 52, exciter rotor 62, and PMG rotor 72 can be disposed on and co-rotate with the drive shaft 40. The fixed components can be mounted to any suitable part of the housing 18, and include the main machine stator assembly 54, exciter stator 64, and PMG stator 74. Collectively, the fixed components define an interior through which the drive shaft 40 extends and rotates relative to.

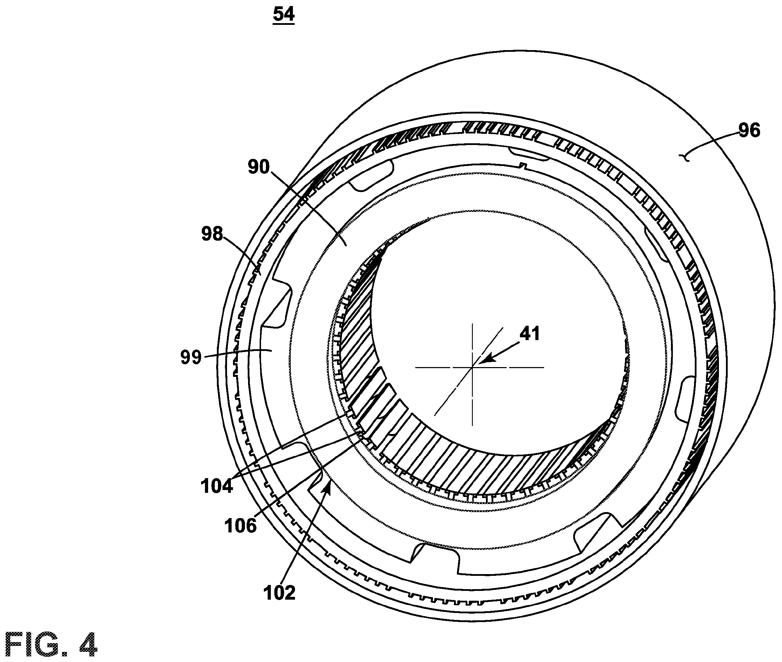

The stator assembly 54 is disposed within the housing 18. For example, the housing 18 can have an annular shape that defines a central bore. The central bore can be elongated along the rotational axis 41. The stator assembly 54 can define a set of slots (FIG. 4) circumferentially disposed around the central bore 55. The main machine rotor 52 can be held or disposed within the central bore 55, and coupled to the drive shaft 40. As such, the main machine rotor 52 can rotate relative to the stator assembly 54 around the rotational axis 41.

It will be understood that the main machine rotor 52, exciter rotor 62, and PMG rotor 72 can have a set of rotor poles, and that the main machine stator assembly 54, exciter stator 64, and PMG stator 74 can have a set of stator poles. The set of rotor poles can generate a set of magnetic fields relative to the set of stator poles, such that the rotation of the rotor magnetic fields relative to the stator poles generate current in the respective stator components.

At least one of the rotor poles and stator poles can be formed by a core with a post and wire wound about the post to form a winding, with the winding having at least one end turn 92 or end winding. Aspects of the disclosure shown include at least one set of stator windings 90 arranged longitudinally along the housing 18, that is, in parallel with housing 18 and the rotational axis 41. The set of stator windings 90 can also include a set of end turns 92 extending axially beyond opposing ends of a longitudinal length of a main machine stator assembly 54. Each of the stator windings 90 can comprise a thermally conductive and electrically conductive material including, but not limited to, copper.

The components of the generator 14 can be any combination of known generators. For example, the main machine 50 can be either a synchronous or asynchronous generator. In addition to the accessories shown in this aspect, there can be other components that need to be operated for particular applications. For example, in addition to the electromechanical accessories shown, there can be other accessories driven from the same drive shaft such as the liquid coolant pump, a fluid compressor, or a hydraulic pump.

As explained above, the generator 14 can be oil cooled and thus can include the liquid cooling system 80 fluidly coupled to the coolant source 81. The coolant from the coolant source 81such as the cooling oil can be used to dissipate heat generated by the electrical and mechanical functions of the generator 14. The liquid cooling system 80 using oil can also provide for lubrication of the generator 14. In the illustrated aspects, the generator 14 can be a liquid cooled, liquid cooling system 80 including the cooling fluid inlet port 82 and the cooling fluid outlet port 84 for controlling the supply of the cooling fluid to the liquid cooling system 80. The liquid cooling system 80 can further include, for example, a cooling fluid reservoir 86 and various cooling passages. The drive shaft 40 can provide one or more channels or paths for coolant or fluid coolant flow 85 (shown schematically as arrows) for the main machine rotor 52, exciter rotor 62, and PMG rotor 72, as well as a rotor shaft cooling fluid outlet 88, such as the second coolant outlet port 91, wherein residual, unused, or unspent oil can be discharged from the drive shaft 40.

In non-limiting examples of the generator 14, the fluid coolant flow 85 can further be directed, exposed, sprayed, or otherwise deposited onto the set of stator windings 90, the set of end turns 92, or onto alternative or additional components. In this example, the fluid coolant flow 85 can flow from the drive shaft 40 radially outward toward the set of stator windings 90 or the set of end turns 92. In this sense, the fluid coolant flow 85 can cool the respective set of stator windings 90 or set of end turns 92 via the set of fluid passages coupled to the cooling fluid reservoir defined as the coolant source 81.

FIG. 4 further illustrates the main machine stator assembly 54 for the main machine of the generator 14 of FIG. 3. While the main machine stator assembly 54 is shown and described, aspects of the disclosure can be applicable or utilized for any stator assembly of an electric machine, including, but not limited to the exciter stator 64, the PMG stator 74, or the like. In one non-limiting configuration, the main machine stator assembly 54 can include, in a radially arranged relationship, an outer stator case 96, a stator frame 98, a stator support 99, and a stator core 102. As shown, each of the aforementioned components can be radially arranged about the rotational axis 41 extending in an axial direction relative to the main machine stator assembly 54. As shown, the stator core 102 can include a generally cylindrical form received radially within the stator support 99, also having a generally cylindrical form. The stator support 99 is further radially received within the stator frame 98, also having a generally cylindrical form. The stator frame 98 can further be radially received within the outer stator case 96 having a generally cylindrical form. It will be appreciated that the stator support 99 and the stator frame 98 can be received within the stator frame 98 and the outer stator case 96, respectively, through press fitting.

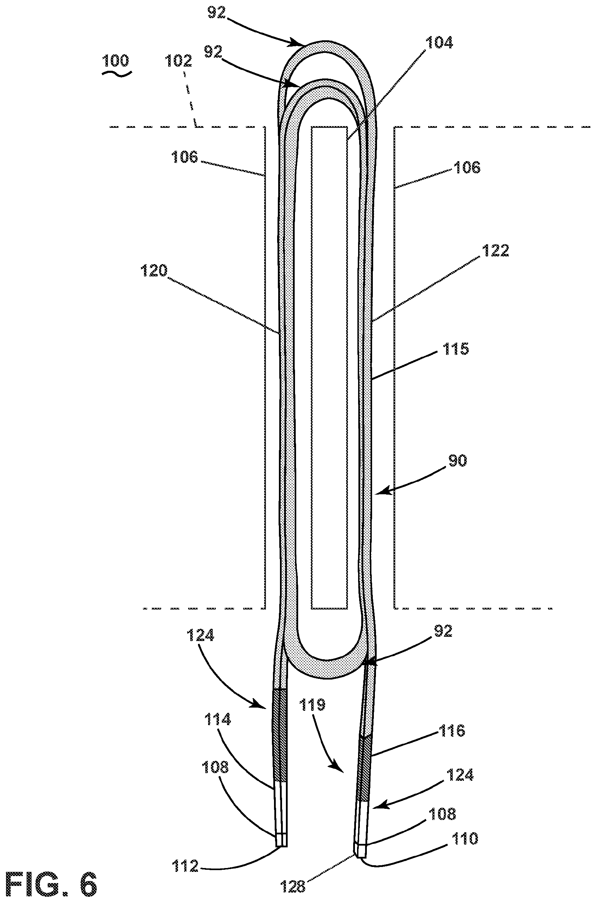

The stator core 102 can further include a set of posts or teeth 104 extending from the stator core 102 radially inward toward the rotational axis 41. The set of teeth 104 can further define a set of slots 106, such as openings, gaps, spaces, or the like, between adjacent teeth 104. At least a subset of the slots 106 can be wound with a conductive wire or set of conductive wires to form the set of stator windings 90 schematically illustrated in FIG. 4. In one non-limiting example, each of the slots 106 of the set of slots 106 can include or otherwise receive at least one stator winding 90. The at least one stator winding 90 can extending through at least a subset of the slots 106 within the housing, 18. In non-limiting aspects, the stator winding 90 can include an in-slot portion within the slots 106 of the stator core 102 and an end turn 92 (FIG. 6) disposed outside of the slots 106.

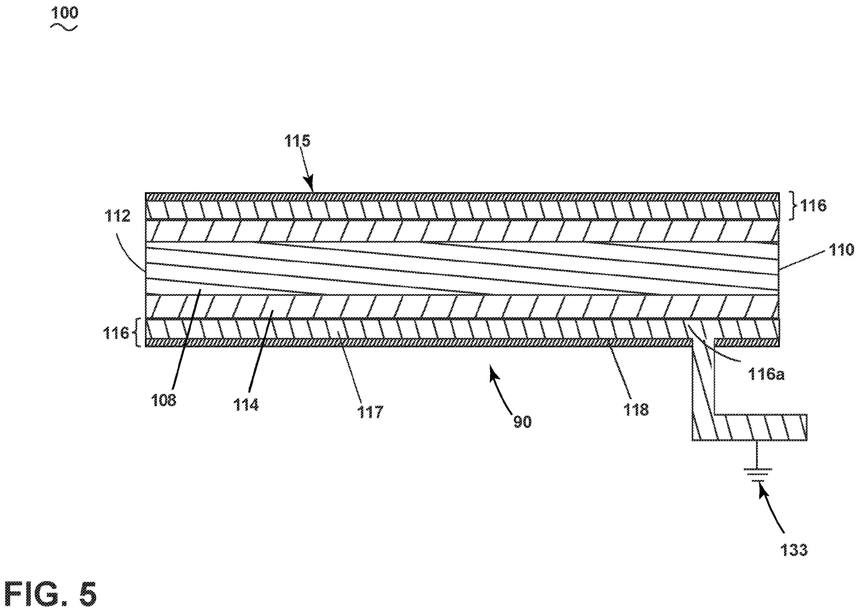

FIG. 5 is a schematic cross-sectional view of an electric winding assembly 100, such as a stator winding 90 of FIG. 3. The stator winding 90 can be one of a set of stator windings 90, or can collectively comprise the set of stator windings 90. The electric winding assembly 100, specifically the stator winding 90, can include a conductor core 108 including a first end 110 and an opposing second end 112. The conductor core 108 is circumferentially surrounded by an insulation layer 114. The insulation layer 114 can overlie or circumferentially surround the conductor core 108 from the first end 110 and the second end 112. For example, the insulation layer 114 can be a sleeve that circumferentially surrounds the conductor core 108.

A conductive shield layer 116 can circumferentially surround the insulation layer 114. The conductive shield layer 116 can overlie or circumferentially surround the insulation layer 114 from the first end 110 and the second end 112. The conductive shield layer 116 can include an insulative carrier 117 and a conductive layer 118. For example, in non-limiting aspects, the conductive layer 118 can be disposed on a periphery of the insulative carrier 117 to circumferentially surround the insulative carrier 117. In other non-limiting aspects, the conductive layer 118 can further be disposed within the insulative carrier 117. While the conductive layer 118 is depicted in FIG. 5 for ease of description and understanding as being a separate or distinct layer from the insulative carrier 117, other aspects are not so limited. In other non-limiting aspects, the conductive material can further be infused within the insulative carrier 117. For example, in some aspects, the conductive material can be in particle form and dispersed within the insulative carrier 117.

A semi-conductive layer 115 can be applied around a periphery of the conductive shield layer 116. The semi-conductive layer 115 can include a tape, a coating, or a paint of any suitable material such as, but not limited to Silicon Carbide (SiC), or the like. In non-limiting aspects, a portion of the semi-conductive layer 115 can overlay cover, or circumferentially surround a portion of the conductive shield layer 116 such that a termination point 116a of the conductive shield layer 116 occurs underneath the semi-conductive layer 115. For example, the portion of the semi-conductive layer 115 can be a sleeve that circumferentially surrounds the portion of the conductive shield layer 116.

The insulation layer 114 can include any suitable insulating material placed around the conductor core 108 including, but not limited to, mica insulation or tape, polymer film, composite insulation, or the like. It is further contemplated that the insulation layer 114 can be impregnated or supported by other materials such as, but not limited to, an epoxy resin or a fiberglass weave.

The conductive shield layer 116 can have a thickness in the range of 1-8 thousandths of an inch (mils). In non-limiting aspects, the insulative carrier 117 can be formed from a suitable electrically insulative material such as a polymer, for example, a polyetheretherketone (PEEK) material. In other aspects, the insulative carrier 117 can be one or more of aramid fiber tape, ceramic fiber tape, mica, glass, ceramic, insulating composite, or any other electrically insulative material. Regardless of the particular electrically insulative material used to form the insulative carrier 117, the insulative carrier can have a thermal rating greater than 180°C, in accordance with the International Electrotechnical Commission (IEC) standard IEC 60216-1. In other aspects, the insulative carrier 117 can have a thermal rating greater than 240°C, in accordance with IEC standard IEC 60216-1.

The conductive layer 118 can be formed from any desired metal alloy material such as alloys of nickel, copper, silver, gold, and the like (e.g., a metal powder or coating). In other non-limiting aspects, the conductive layer 118 can be formed from other conductive materials such as carbon. The conductive layer 118 can have a thickness of less than 1 micron. The conductive layer 118 can be deposited on the insulative carrier 117 to define the conductive shield layer 116. When so arranged, in some aspects, the conductive shield layer 116 can have a surface resistivity of 1.5- 10 Ohms/square. In other non-limiting aspects, the conductive shield layer 116 can have a surface resistivity of 1.5- 50 Ohms/square.

Both the insulation layer 114 and the conductive shield layer 116 can include a set of insulation layers 114 or a set of conductive shield layers 116, respectively. For example, the conductive shield layer 116 can include tape formed from PEEK material, and the tape can be wrapped around itself two or more times such that the conductive shield layer 116 is any number of two or more conductive shield layers 116 radially stacked on one-another from the conductor core 108, thus forming the set of conductive shield layers 116. It is further contemplated that the insulation layer 114 and the conductive shield layers 116 can be non-uniform along the conductor core 108. For example, the thickness of the insulation layer 114 at the end the first end 110 can be larger than the thickness of the insulation layer 114 at the second end 112. This can be used in cases where an increase in the thickness of layers, such as an increased thickness in the insulation layer 114 to provide for additional insulation is preferred or required at various locations along the electric winding assembly 100.

It will be appreciated that although no turns in the electric winding assembly 100 are illustrated in FIG. 5, the electric winding assembly 100 can further include a set of end turns between the first end 110 and the second end 112.

It will be understood that in operation, for example when a voltage exists between the conductor core 108 and a ground potential, a tangential electric field (not shown) is induced within and along a surface of the insulation layer 114. In aspects, the conductive layer 118 operatively grades or reduces the tangential electric field (e.g., along a surface of the insulation layer 114) reducing the risk of partial discharge at a surface of the insulation layer 114. For example, the conductive shield layer 116 can prevent a partial discharge emitting exteriorly from the surface of the insulation layer 114. Furthermore, circumferentially surrounding the conductor core 108 with the conductive layer 118 provides an EMI shielding layer to reduce EMI caused by any electrical current flowing in the conductor core 108.

FIG. 6 illustrates a perspective view of a section of the electric winding assembly 100 of FIG. 5 received within the stator core 102 of FIG. 4. As illustrated, each stator winding 90 of the set of stator windings 90 can be received within corresponding slots 106 of the set of slots 106. The stator winding 90 can include a first leg 120 received within a first slot 106 of the set of slots 106 and a second leg 122 received within a second slot 106 slot 106 of the set of slots 106. The first and second slots 106 can be adjacent one another. Alternatively, the first and second slots 106 can be circumferentially spaced from one another with one or more slots 106 of the set of slots 106 located between the first and second slots 106. The first leg 120 and the second leg 122 can be separated by a corresponding tooth 104 of a set of teeth 104. In the non-limiting illustrated example, the stator winding 90 can include three end turns 92 provided axially outward from the set of slots 106 or axially beyond the stator core 102. It will be appreciated that there can be any number of end turns 92. As illustrated, the end turns 92 can be axially spaced from one another at a corresponding end of the stator core 102.

The electric winding assembly 100 can further include a set of leads 124 at the corresponding first end 110 or the second end 112. A terminal end 128 can be electrically coupled to a portion of the electric winding assembly 100. For example, the terminal end 128 can be provided adjacent the first end 110 of the conductor core 108. It will be appreciated, however, that the terminal end 128 can be provided adjacent one of either the first end 110 or the second end 112. The set of leads 124 can be defined as a portion of the electric winding assembly 100 which terminate in a free end at either the first or second ends 110, 112 or the terminal end 128.

In non-limiting aspects, the terminal end 128 can be configured to act as a ground of the electric machine. The terminal end 128 can be electrically coupled to a portion of the conductive shield layer 116 received within the slot 106. The ground can be, for example, a portion of a stator assembly 54, specifically a stator core 102. Alternatively, the ground can be any other suitable ground exterior the stator assembly 54 or the electric machine, or a common ground defined by a collective electrical connection to other terminal ends 128 of the set of electric winding assemblies 100. As such, the terminal end 128 can be defined as a portion of the electric winding assembly 100 conductively connected to a common ground (e.g. ground 133, FIG. 5).

The terminal end 128 can be electrically coupled to a terminal end lead 119 which can extend along a portion of the second leg 122 and terminate within the slot 106. As shown, non-limiting examples of the electric winding assembly 100 can be included where the set of leads 124 are located or co-located on a same or common axial end of the of the stator core 102. The set of leads 124 can be further defined as a portion of the electric winding assembly 100 without the conductive shield layer 116. The set of leads 124 can include at least a portion of the leads with the conductor core 108 without the insulation layer 114. The set of leads 124 can be electrically coupled with one or more leads of adjacent electric winding assemblies 100 (e.g., the set of leads 124 terminating in the first or second end 110, 112) or the common ground (e.g., the lead 124 terminating in the terminal end 128).

The semi-conductive layer 115 can be included along a portion of the leads 124 closest to the conductive shield layer 116 and extend along a portion of the leads 124. The semi-conductive layer 115 can be applied around the periphery of the insulation layer 114 of the leads 124. The semi-conductive layer 115 can be configured to further reduce the amount of partial discharge from the electric winding assembly 100 at the leads 124. The semi-conductive layer 115 can include a tape, a coating, or a paint of any suitable material such as, but not limited to Silicon Carbide (SiC), or the like. It will be appreciated that for purposes of illustration only, the semi-conductive layer 115 is depicted in FIG. 6 as extending over essentially the entire length of the leads 124, other aspects are not so limited. In other non-limiting aspects, the semi-conductive layer 115 can extend over only one or more portions of the leads 124. For example, in some aspects, the semi-conductive layer 115 can extend only over a portion at the first end 110 and the second end 112 of the leads 123.

The semi-conductive layer 115 can overlay or circumferentially surround a portion of the conductive shield layer 116 such that a termination point 116a of the conductive shield layer 116 occurs underneath the semi-conductive layer 115. For example, the semi-conductive layer 115 can be a sleeve that circumferentially surrounds or covers the conductive shield layer 116. As such, a portion of the semi-conductive layer 115 can extend into the slot 106. Additionally, or alternatively, a layer of high-permittivity insulation (not shown) could be applied over the termination point 116a of the conductive shield layer 116. In non-limiting aspects, the termination point 116a can be coupled to a ground 133.

It will be appreciated that the thickness of the insulation layer 114 and the conductive shield layer 116 can vary along the entirety of the electric winding assembly 100. For example, the insulation layer 114 can include be thicker (e.g., include a larger thickness, thus providing additional insulative properties, comparatively) at the end turns 92 than it is along the stator winding 90 within the slots 106. Specifically, the stator winding 90 within the slot 106 can be defined by an axial length in a direction along a central stator axis. The thickness of the insulation layer 114 at the end turn 92 can be larger than the axial length of the stator winding 90. This variation in the insulation layer between the stator winding 90 and the end turns 92 can allow for an increased insulation along the electric winding assembly 100.

In operation, the electric winding assembly 100, specifically the stator windings 90 and the end turns 92 of the electric machine can experience high voltages based on performance parameters or environmental conditions. As used herein, performance parameters can refer to the parameters of the operation of the electric machine including, but not limited to, the operating voltage of the electric machine. Environmental conditions can refer to external conditions for the electric machine including, but not limited to, an altitude, an air pressure, an ambient air temperature, or a combination thereof. In conventional electric machines without the electric winding assembly 100 as described herein, the performance parameters or environmental conditions, in turn, produce undesirable arc conditions or a partial discharge. The electric machine as described herein can operate at a high voltage while the aircraft is at a high altitude when compared to traditional electric machines or aircrafts including the traditional electric machines. The electric machine as described herein can operate at high voltage, high altitude conditions because of the electric winding assembly 100 that can prevent partial discharge from the set of stator windings 90. Specifically, the insulation layer 114 and the conductive shield layer 116 can prevent the partial discharges from occurring, or can reduce the likelihood of partial discharges from occurring, for example, in the environmental conditions or performance parameters discussed herein. The insulation layer 114 can further provide phase separation between adjacent stator windings 90. The conductive shield layer 116 can block any surface partial discharge created by the conductor core 108 from entering the medium external the electric winding assembly 100. This can be done as the conductive shield layer 116 can act as a Faraday cage or a Faraday shield which is ultimately grounded (e.g., to ground 133, FIG. 5). As such, the conductive shield layer 116 couples the external surface the insulation layer 114 to electrical ground 133 especially in the end region of the machine, effectively reducing the local tangential electric field at the surface of the insulation layer 114, and beneficially increasing the PDIV and PDEV. In operation, the respective outer surfaces of the insulation layer 114 of each stator winding 90 are held at the same voltage potential by the conductive shield layer 116 such that a surface partial discharge at the insulation layer 114 is prevented. For example, the conductive shield layer 116 circumferentially surrounds the insulation layer 114 and can be electrically coupled to the stator core 102 defining a voltage potential close or equal to zero volts on the outer surface of each individual stator winding 90. Consequently, a voltage potential between any two surfaces of the stator windings 90 are close or equal to zero volts, thereby preventing partial discharges between stator windings 90. This arrangement enables closer spacing of each phase of the stator windings 90, particularly at the end region of the electric machine, than in prior art machines, while reducing the risk of a surface partial discharge event.

The semi-conductive layer 115 can be included over a portion of the electric winding assembly 100. Specifically, the semi-conductive layer 115 can be provided over the termination of the conductive shield layer 116. As a non-limiting example, a local electric field can occur at the termination of the conductive shield layer 116. This local electric field can, in turn, be projected outward, and away from the termination of the conductive shield layer 116. The semi-conductive layer 115 can be configured to control or suppress the local electric field at the termination of the conductive shield layer 116 to ensure that it does not cause a surface partial discharge. It is further contemplated that the addition of the high-permittivity insulation can also further limit or control the local electric field.

Although described in terms of electric winding assembly 100, it will be appreciated that other aspects (e.g., a method of cooling the electric winding assembly 100) as described herein can be included in the electric winding assembly 100 to further ensure the prevention of partial discharge under the performance parameters of the electric machine or the environmental conditions of the aircraft as described herein.

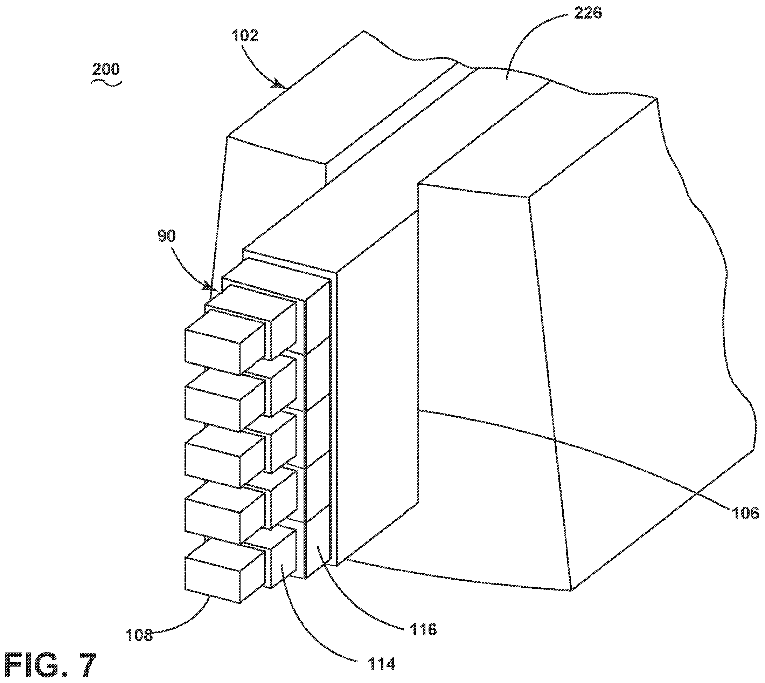

FIG. 7 is a schematic cross-sectional view of an electric winding assembly 200, such as the set of stator windings 90 of FIG. 4. The electric winding assembly 200 is similar to the electric winding assembly 100 therefore, like parts will be identified with like numerals, with it being understood that the description of the like parts of the electric winding assembly 100 applies to the electric winding assembly 200 unless otherwise noted. As illustrated, the electric winding assembly 200 can include a bundle of conductor cores 108 surrounded by various layers as described herein. As used herein, the term "bundle" can refer to a grouping or cluster of elements, specifically the conductor core 108 surrounded by various layers as described herein. As illustrated, the electric winding assembly 200 can include five stator windings 90 each including a corresponding conductor core 108 formed within the bundle. Although illustrated as a singular bundle received within the slot 106, it is contemplated that there can be any number of one or more bundles received within the slot 106 each of the same or differing phases and including any number of one or more conductor cores.

For illustrative purposes only, the electric winding assembly 200 is shown as a telescopic assembly by peeling away or omitting subsequent layers of the electric winding assembly 200. As such, any portion of the electric winding assembly 200 (specifically the stator winding 90) can include the conductive shield layer 116, and the insulation layer 114 surrounding the conductor core 108.

The electric winding assembly 200 can include the set of conductive shield layers 116 around a corresponding conductor core 108. The conductor cores 108, and hence the conductive shield layers 116, can be radially stacked within the slot 106 such that at least a portion of an outer surface of the conductive shield layers 116 of adjacent conductor cores 108 can be in electrically conductive contact.

A wrapping or an additional conductive shield layer 226 can be formed around the periphery of the conductive shield layer 116. It is contemplated that the additional conductive shield layer 226 can be formed around the entire bundle such that it inscribes the conductor cores 108 within the bundle. Specifically, the additional conductive shield layer 226 can be formed around the periphery of the set of conductive shield layers 116. It is contemplated that the additional conductive shield layer 226 can be included as a portion of the conductive shield layer 116. In other words, the additional conductive shield layer 226 can include the same material as the conductive shield layer 116 such that it includes the same electrically conductive properties as the conductive shield layer.

As a non-limiting example, the additional conductive shield layer 226 can be included in instances where additional shielding or protection of the electric winding assembly 200 is required or preferred. For example, the additional conductive shield layer 226 can provide for additional conductive shielding for the electric winding assembly 200. The additional conductive shield layer 226 can be included in cases or specific areas of the electric winding assembly where increased conductive shielding can be required (e.g., based on operating voltage, altitude of the aircraft, etc.).

As illustrated, the electric winding assembly 200 includes five radially stacked stator windings 90. The stator windings 90 can be fully inscribed within the additional conductive shield layer 226 to form the bundle. It will be appreciated, however, that there can be any number of stator windings 90 and bundles received within the corresponding slot 106. Additionally, or alternatively, the stator windings 90 can be received within the corresponding slot 106 in a non-radial manner such as, for example, circumferentially within the slot 106. It is further contemplated that one or more the stator windings 90, or one or more of the bundles, within a single slot 106 can be of a single electrical phase, or different sets or groupings of stator windings 90 within a single slot 106 can be of different electrical phases. For example, in terms of the stator windings 90, there can be stator windings 90 having two or three different electrical phases within a single slot 106. It is further contemplated that the additional conductive shield layer 226 can form a set of wrappings which can separate or group the windings defining the one or more electrical phases within each slot 106. For example, one additional conductive shield layer 226 of the set of wrappings can fully encase three of the stator windings 90 of a first phase to form a first bundle, while a second additional conductive shield layer 226 of the set of wrappings can fully encase the remaining two stator windings 90 of a second phase to form a second bundle, different than the first phase. Alternatively, it is contemplated that the additional conductive shield layer 226 can be omitted from the electric winding assembly 200. In such cases, the conductive shield layer 116 can form the periphery of the electric winding assembly 200 and abut directly against the slot 106.

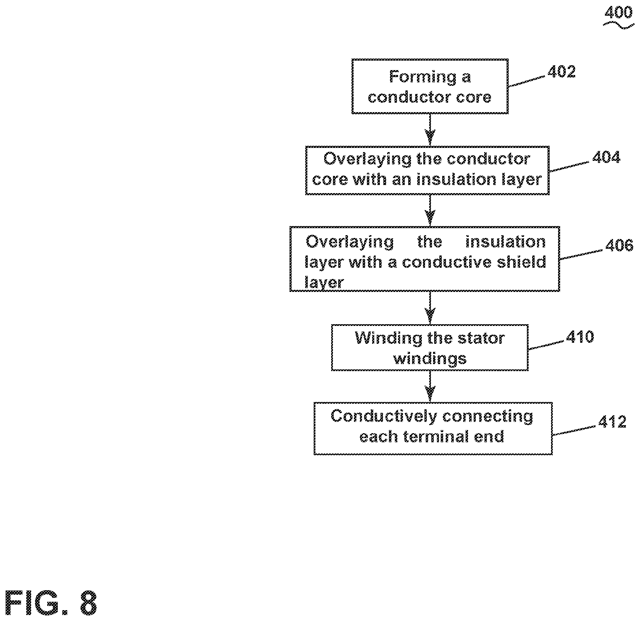

FIG. 8 is a non-limiting example of a method 400 of forming the stator core 102 of FIG. 3, as described herein. Although described in terms of the electric winding assembly 100, 200, it will be appreciated that the methods described can be applied to any of the electric winding assemblies 100, 200 or combination thereof, as described herein.

The method 400 can begin with forming the conductor core 108, at step 402. The conductor core 108, can be formed through any suitable manufacturing method and include any suitable conductive material, such as, but not limited to, copper. The conductor core 108, can then be overlaid with the insulation layer 114, at step 404. For example, the insulation layer can be a sleeve arranged to circumferentially surround or covers the conductor core 108. The insulation layer 114 can be overlaid with the conductive shield layer 116, at step 406. For example, the conductive shield layer 116 can be a sleeve that circumferentially surrounds or covers the insulation layer 114. The conductive shield layer 116 can include an insulative carrier 117 having a conductive layer 118 disposed on the insulative carrier 117. The conductive shield layer 116 can have a thickness in the range of 1-8 thousandths of an inch (mils). The insulative carrier 117 can be formed from a suitable material such as PEEK material, aramid fiber tape, or ceramic fiber tape, mica, ceramic, or glass having a thermal rating greater than 180°C, in accordance with IEC standard IEC 60216-1. In other aspects, the insulative carrier 117 can have a thermal rating greater than 240°C, in accordance with IEC standard IEC 60216-1. The conductive layer 118 can comprise any desired metal alloy such as alloys of nickel, copper, silver, gold, and the like. In other non-limiting aspects, the conductive layer 118 can comprise carbon. The conductive layer 118 can have a thickness of less than 1 micron. The conductive layer 118 can be deposited on the insulative carrier 117 to cooperatively define the conductive shield layer 116. For example, in non-limiting aspects, the conductive layer 118 can be deposited on a periphery of the insulative carrier 117 to circumferentially surround the insulative carrier 117. In other non-limiting aspects, the conductive layer 118 can further be dispersed within the insulative carrier 117. The conductive shield layer 116 can have a surface resistivity of 1.5- 10 Ohms/square. In other non-limiting aspects, the conductive shield layer 116 can have a surface resistivity of 1.5-50 Ohms/square.

Both the insulation layer 114 and the conductive shield layer 116 can include a set of insulation layers 114 or a set of conductive shield layers 116, respectively. For example, the conductive shield layer 116 can include tape formed from PEEK material, and the tape can be wrapped around itself two or more times such that the conductive shield layer 116 is any number of two or more conductive shield layers 116 radially stacked on one-another from the conductor core 108, thus forming the set of conductive shield layers 116. A semi-conductive layer 115 can be applied around the periphery of the insulation layer 114. It is contemplated that in non-limiting aspects, the method can include overlaying (e.g., circumferentially surrounding) or covering the conductive shield layer 116 with the semi-conductive layer 115. The semi-conductive layer 115 can include a tape, a coating, or a paint of any suitable material such as, but not limited to Silicon Carbide (SiC), or the like.

The stator windings 90 of the electric winding assembly 100, 200 can then be wound through respective slots 106 and around a corresponding tooth 104 of the stator core 102, at step 410. The set of terminal ends 128 can be conductively connected to at least a portion of the stator core 102 or the electric machine to form a common ground, at step 412.

The sequence depicted is for illustrative purposes only and is not meant to limit the method 400 in any way as it is understood that the portions of the method can proceed in a different logical order, additional or intervening portions can be included, or described portions of the method can be divided into multiple portions, or described portions of the method can be omitted without detracting from the described method. For example, the method 400 can include various other steps. In one non-limiting example, the end turns 92 can be overlaid with the insulation layer 114 such that the insulation layer 114 of the end turn 92 has a greater thickness than the axial length of the conductor core through the slot 106. Further, a subset of the stator windings 90 can be grouped within during step 410 such that the subset of stator windings 90 can have a common conductive phase and be overlaid with a second conductive shield layer 116 to group the subset of stator windings by phase. In another non-limiting example, a subset of conductor cores 108, can be overlaid with a respective subset of insulation layers 114 at step 404. The subset of insulation layers 114 can additionally or alternatively be overlaid with a singular conductive shield layer 116 at step 406 in order to define a single-phase grouping of conductor cores 108.

It is contemplated that aspects of this disclosure can be advantageous for use over conventional electric winding assemblies. Advantages include that the electric winding assembly as described herein can allow for a high-voltage, high-altitude system, or a compact system to operate without the threat of undesirable partial discharges. Conventional electric winding assemblies for power generation or power distribution, for example, are rated for voltages of up to 300V at a cruise altitude or sea level. If they operate at a higher altitude, the risk of a partial discharge is increased as the medium surrounding the electric winding assembly thins and trends towards being a vacuum. The electric winding assembly, as described herein, can prevent or reduce partial discharge through the medium exterior the electric winding assembly at cruise altitudes, high altitudes, in high-voltage systems, compact systems, or any combination thereof. Although described in terms of a high-voltage, high-altitude system, it will be appreciated that the electric winding assemblies, as described herein, can include the set of stator windings to prevent partial discharge or surface from the set of windings at cruise altitude atmospheric conditions of an aircraft.

Further advantages of the electric winding assembly include a higher power density for the electric machine. Conventional electric winding assemblies primarily use multiple or thick insulation layers and large spacing between windings in different phase groups in order to prevent partial discharge from occurring. This has been found to be reliable for electric machines operating at the rated voltages at cruise altitude. However, the conventional electric winding assemblies are not suitable for use with high-voltage or high-altitude systems without having to first apply additional insulation layers to the electric winding assembly or to space adjacent windings of different phase groups further from each other. This, in turn, requires a larger electric machine in order to achieve desired operating parameters in high-voltage or high-altitude systems. **In** systems where there is a size constraint, such as in compact systems, this might not be possible as there may not be enough room available for an electric machine including the conventional electric winding assembly with increased thickness of the insulation layers or spacings between adjacent windings of different phases. The electric winding assembly as described herein, however, utilizes additional layers (e.g., the conductive shield layer and the semi-conductive layer) to prevent partial discharge with high-voltage or high-altitude systems. When compared to the conventional electric winding assemblies, the overall thickness of that layers of the electric winding assembly described herein needed to prevent partial discharge is much smaller than the overall thickness of the insulation layers and space requirements needed to do the same thing with the conventional electric winding assembly. As such, the electric winding assembly as described herein allows for more windings to be included within the electric winding assembly, therefore, increasing the power density of the electric winding assembly.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the present disclosure are provided by the subject matter of the following clauses:
An electric winding assembly, comprising: a conductor core having a first end and an opposing second end; an insulation layer overlying the conductor core; and a conductive shield layer overlying the insulation layer, the conductive shield layer comprising: an insulative carrier formed from a material having a thermal rating greater than 180°C, in accordance with IEC standard IEC 60216-1, the insulative carrier circumferentially surrounding the insulation layer, and a conductive layer having a surface resistivity between 1.5 and 10 ohms per square disposed on the insulative carrier.

The electric winding assembly of any preceding clause, wherein the material has a thermal rating greater than 240°C, in accordance with IEC Standard IEC 60216-1.

The electric winding assembly of any preceding clause, wherein the conductive layer is disposed on a periphery of the insulative carrier to circumferentially surround the insulative carrier.

The electric winding assembly of any preceding clause, wherein conductive layer is further dispersed within the insulative carrier.

The electric winding assembly of any preceding clause, wherein the conductive layer is formed from one of a metal or carbon.

The electric winding assembly of any preceding clause, wherein a thickness of the insulative carrier is in a range of 1-8 thousandths of an inch.

The electric winding assembly of any preceding clause, wherein a thickness of the conductive layer is less than 1.5 micron.

The electric winding assembly of any preceding clause, wherein the insulative carrier comprises one of a polyetheretherketone material, an aramid fiber tape, or a ceramic fiber tape.

The electric winding assembly of any preceding clause, further comprising a semi-conductive layer overlying the conductive shield layer.

The electric winding assembly of any preceding clause, wherein the semi-conductive layer comprises Silicon Carbide.

An electric machine, comprising: a housing; a stator within the housing, the stator having an annular shape that defines a central bore, the stator defining a set of slots circumferentially disposed around the central bore; a rotor held within the central bore of the stator, the rotor coupled to a shaft defining a rotational axis, the rotor configured to rotate relative to the stator around the rotational axis; and a stator winding extending through the slots of the stator within the housing, the stator winding including a conductor core, an insulation layer surrounding the conductor core, and a conductive shield layer surrounding the insulation layer, the stator winding including an in-slot portion within the slots of the stator and an end-winding portion outside of the slots, wherein the conductive shield layer overlies the insulation layer, the conductive shield layer comprises an insulative carrier circumferentially surrounding the insulation layer and a conductive layer disposed on the insulative carrier, the insulative carrier formed from a material having a thermal rating greater than 180°C, in accordance with IEC Standard IEC 60216-1, and the conductive layer having a surface resistivity between 1.5 and 10 ohms per square.

The electric machine of any preceding clause, wherein the material has a thermal rating greater than 240°C, in accordance with IEC Standard IEC 60216-1.

The electric machine of any preceding clause, wherein the conductive layer is disposed on a periphery of the insulative carrier to circumferentially surround the insulative carrier.

The electric machine of any preceding clause, wherein conductive layer is further dispersed within the insulative carrier.

The electric machine of any preceding clause, wherein the conductive layer comprises one of a metal or carbon.

The electric machine of any preceding clause, wherein a thickness of the insulative carrier is in a range of 1-8 thousandths of an inch.

The electric machine of any preceding clause, wherein a thickness of the conductive layer is less than 1.5 micron.

The electric machine of any preceding clause, further comprising a semi-conductive layer overlying the conductive shield layer.

The electric machine of any preceding clause, wherein the insulative carrier comprises one of a polyetheretherketone material, an aramid fiber tape, or a ceramic fiber tape.

The electric machine of any preceding clause, wherein the semi-conductive layer comprises Silicon Carbide.

A method of assembling a stator, the method comprising: forming a conductor core; overlying the conductor core with an insulation layer; overlying the insulation layer with a conductive shield layer having a conductively connected terminal end to define a stator winding, the conductive shield layer comprising an insulative carrier formed from a material having a thermal rating greater than 180°C in accordance with IEC Standard IEC 60216-1 circumferentially surrounding the insulation layer and a conductive layer having a surface resistivity between 1.5 and 10 ohms per square disposed on the insulative carrier; and winding the stator winding about a post of a stator.

The method of any preceding clause, wherein the insulative carrier is formed from a material comprising one of a polyetheretherketone, an aramid fiber tape, or a ceramic fiber tape.

The method of any preceding clause, wherein the material has a thermal rating greater than 240°C, in accordance with IEC Standard IEC 60216-1.

The method of any preceding clause, wherein the conductive layer is disposed on a periphery of the insulative carrier to circumferentially surround the insulative carrier.

The method of any preceding clause, wherein conductive layer is further dispersed within the insulative carrier.

The method of any preceding clause, wherein the conductive layer is formed from one of a metal or carbon.

The method of any preceding clause, wherein a thickness of the insulative carrier is in a range of 1-8 thousandths of an inch.

The method of any preceding clause, wherein a thickness of the conductive layer is less than 1.5 micron.

The method of any preceding clause, further comprising disposing a semi-conductive layer overlying the conductive shield layer.

The method of any preceding clause, wherein the semi-conductive layer comprises Silicon Carbide.

## Claims

1. An electric winding assembly (100), (200), comprising:
a conductor core (108) having a first end (110) and an opposing second end (112);
an insulation layer (114) overlying the conductor core (108); and
a conductive shield layer (116) overlying the insulation layer (114), the conductive shield layer (116) comprising:
an insulative carrier (117) formed from a material having a thermal rating greater than 180°C, in accordance with IEC standard IEC 60216-1, the insulative carrier (117) circumferentially surrounding the insulation layer (114), and
a conductive layer (118) having a surface resistivity between 1.5 and 10 ohms per square disposed on the insulative carrier (117).

2. The electric winding assembly (100), (200) of claim 1, wherein the material has a thermal rating greater than 240°C, in accordance with IEC Standard IEC 60216-1.

3. The electric winding assembly (100), (200) of any preceding claim, wherein the conductive layer (118) is disposed on a periphery of the insulative carrier (117) to circumferentially surround the insulative carrier (117).

4. The electric winding assembly (100), (200) of claim 3, wherein the conductive layer (118) is further dispersed within the insulative carrier (117).

5. The electric winding assembly (100), (200) of any preceding claim, wherein the conductive layer (118) is formed from one of a metal or carbon.

6. The electric winding assembly (100), (200) of any preceding claim, wherein a thickness of the insulative carrier (117) is in a range of 1-8 thousandths of an inch.

7. The electric winding assembly (100), (200) of any preceding claim, wherein a thickness of the conductive layer (118) is less than 1.5 micron.

8. The electric winding assembly (100), (200) of any preceding claim, wherein the insulative carrier (117) comprises one of a polyetheretherketone material, an aramid fiber tape, or a ceramic fiber tape.

9. The electric winding assembly (100), (200) of any preceding claim, further comprising a semi-conductive layer (118) overlying the conductive shield layer (116).

10. The electric winding assembly (100), (200) of claim 9, wherein the semi-conductive layer (118) comprises Silicon Carbide.

11. An electrical machine (50), (60), (70) comprising:
an electric winding assembly (100), (200) according to any preceding claim;
a housing (18);
a stator (54) within the housing (18), the stator (54) having an annular shape that defines a central bore (55), the stator (54) defining a set of slots (106) circumferentially disposed around the central bore (55);
a rotor (52) disposed within the central bore (55) of the stator (54), the rotor (52) coupled to a shaft (40) defining a rotational axis (41), the rotor (52) configured to rotate relative to the stator (54) around the rotational axis (41); and
a stator winding (90) extending through the slots (106) of the stator (54) within the housing (18), the stator winding (90) comprising the electric winding assembly, (100), (200) the stator winding (90) including an in-slot portion within the slots (106) of the stator (54) and an end-winding portion (92) outside of the slots (106).

12. A method (400) of assembling a stator (54), the method comprising:
forming a conductor core (108);
overlying the conductor core (108) with an insulation layer (114);
overlying the insulation layer (114) with a conductive shield layer (116) having a conductively connected terminal end to define a stator winding (90), the conductive shield layer (116) comprising an insulative carrier (117) formed from a material having a thermal rating greater than 180°C in accordance with IEC Standard IEC 60216-1, the insulative carrier (117) circumferentially surrounding the insulation layer (114), and a conductive layer (118) having a surface resistivity between 1.5 and 10 ohms per square disposed on the insulative carrier (117); and
winding the stator winding (90) about a post (106) of the stator (54).

13. The method (400) of claim 12, wherein the material has a thermal rating greater than 240°C, in accordance with IEC Standard IEC 60216-1.

14. The method (400) of claim 12 or 13, wherein the conductive layer (118) is disposed on a periphery of the insulative carrier (117) to circumferentially surround the insulative carrier (117).

15. The method (400) of claim 14, wherein conductive layer (118) is further dispersed within the insulative carrier (117).
